# EUROPEAN PATENT APPLICATION

(11) **EP 4 672 523 A1**
(43) Date of publication of application: **31.12.2025**
(21) Application number: 25182802.6
(22) Date of filing: 13.06.2025
(51) Int. Cl.: H02B 11/18, H02B 1/26, H01H 9/00

(54) **SWITCH ACTUATOR**

(30) Priority: 21.06.2024 US 202418750959
(71) Applicant: Cummins Power Generation, Inc., Minneapolis MN 55432 (US)
(72) Inventor: Kondagadapa, Laxminaresh, 411041 Pune (IN); Arrigoni, Mark A., Saint Paul, 55127-7944 (US)
(74) Representative: Cleveland Scott York

(57) **Abstract**

An electrical connection is provided. An electrical connection apparatus includes a mechanism (100) to transport a switch between a retracted position and an extended position. The mechanism includes multiple scissor arms (108). The mechanism includes a drive (110) configured to receive power from a power source. The drive uses the power to extend the scissor arms to transport the switch to the extended position and retract the scissor arms to transport the switch to the retracted position.

## Description

### TECHNICAL FIELD

The present disclosure relates generally to switch actuation. More particularly, the present disclosure relates to a switch actuator to cause linear travel of an attachment point for a switch.

### BACKGROUND

Switches can couple a power sink with a power source to maintain continual power delivery. For example, switches can switch between a primary and secondary power source for a high reliability energy sink. Such switches can receive preventative or corrective maintenance *in situ,* which may cause a maintainer to operate proximal to high voltage terminals.

### SUMMARY

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

In one aspect of the disclosure, an electrical connection apparatus includes a mechanism to transport a switch between a retracted position and an extended position. The mechanism includes multiple scissor arms. The mechanism includes a drive configured to receive power from a power source. The mechanism is configured to use the power to extend the scissor arms to transport the switch to the extended position and retract the scissor arms to transport the switch to the retracted position.

In some embodiments, the drive is an electrical screw drive. The mechanism can include attachment points to couple with the switch. The coupling can include a non-electrically conductive path between the power source and any terminals of the switch.

In some embodiments, the electrical connection apparatus includes the power source. The power source can include a battery coupled with the mechanism and electrically isolated from the terminals of the switch.

In some embodiments, the electrical connection apparatus includes a mounting foot configured to couple with an electrical cabinet at a first end of the scissor arms. The electrical connection apparatus can include an attachment point to couple with the switch at a second end of the scissor arms.

In some embodiments, the mechanism includes a mechanical drive receiver configured to receive a driver for rotation of a screw of the drive.

In some embodiments, the mechanism includes a sensor to indicate a position of the scissor arms. The sensor can include an interface to provide data indicating the position of the scissor arms to a display. The sensor can be powered by the power source.

In some embodiments, the electrical connection apparatus includes a manually actuated switch to selectively pass an electrical signal from the power source to the drive. The electrical signal can cause the drive to extend or retract the scissor arms to transport the switch between the extended position and the retracted position.

In another aspect of the disclosure, an electrical connection system includes a mechanism having scissor arms. The electrical connection system includes a screw drive to selectively mate one or more switches. The screw drive includes is coupled with at least one of the scissor arms. The screw drive is configured to extend the scissor arms to transport a first switch of the one or more switches to an extended position and retract the scissor arms to transport the first switch to a retracted position. The electrical connection system may comprise an electrical connection apparatus in any of the forms described above.

In some embodiments, the scissor arms of the electrical system are configured to extend and retract along an axial direction perpendicular to a surface of a platform, the platform comprising a plurality of attachment points to couple with the first switch.

In some embodiments, the electrical system includes a first switch including a first set of terminals configured to couple with a first electrical energy source. The first switch can include a second set of terminals configured to couple with a second electrical energy source. The first switch can include a third set of terminals configured to couple with a load. The first switch can include a third switch to electrically couple the third set of terminals with one of the first set of terminals or the second set of terminals. The first switch can be configured to couple with a second switch in the extended position and decouple from the second switch in the retracted position.

In some embodiments, the electrical connection system includes the second switch. The second switch can include a fourth set of terminals configured to couple with the first electrical energy source and the first set of terminals in the extended position, to couple the first electrical energy source with the first set of terminals. The second switch can include a fifth set of terminals configured to couple with the second electrical energy source and the second set of terminals the extended position, to couple the first electrical energy source with the second set of terminals. The second switch can include a sixth set of terminals configured to couple with the load and the third set of terminals the extended position, to couple the load with the third set of terminals and a fifth switch to electrically couple the sixth set of terminals with one of the fourth set of terminals or the fifth set of terminals.

In some embodiments, the first switch includes control circuitry. The control circuitry can detect a signal as received by the fourth set of terminals. The control circuitry can compare a value of the signal to a signal threshold. The control circuitry can couple, responsive to the comparison and using the third switch, the sixth set of terminals with the fourth set of terminals. The control circuitry can decouple, responsive to the comparison and using the third switch, the sixth set of terminals from the fifth set of terminals. The second switch can include a mechanically actuated manual switch of a manual transfer switch.

In some embodiments, the screw drive is electrically powered from an electrical source which is electrically isolated from the first electrical energy source and the second electrical energy source. In some embodiments, the electrical source a battery. In some embodiments, the screw drive is engageable via a mechanically actuated electrical switch remote from the mechanism. In some embodiments, the screw drive includes a drive receiver to receive a driver for rotation of a screw of the screw drive.

In a further aspect of the disclosure, a method of servicing an electrical connection system is provided. The method can be performed be an electrical controller. The method can include receiving a first indication of a condition of a first power signal received from a first source. The method can include coupling, responsive to the condition of the first power signal, a load with one of a first set of power input terminals of a first transfer switch or a second set of power input terminals of the first transfer switch. The method can include receiving a second indication to service the transfer switch. The method can include engaging, responsive to the second indication, a linear actuator to decouple the first transfer switch from a second transfer switch, the second transfer switch configured to couple the load with one of the first power signal or a second power signal according to a position of a mechanically actuated manual switch.

In some embodiments, coupling the load with the second set of power input terminals includes coupling a set of load terminals with the first set of power input terminals and thereafter decoupling the set of load terminals from the second set of power input terminals.

In some embodiments, receiving the second indication includes receiving, from a manually actuated switch, an electrical signal indicating a retraction of a pair of scissor arms of the linear actuator. The electrical signal generated from a power source can be electrically isolated from the first set of power input terminals and the second set of power input terminals.

In some embodiments, the method includes displaying, via a user interface, an indication of a position of the linear actuator.

Features of one aspect may be provided with any other aspect.

### BRIEF DESCRIPTION OF THE FIGURES

FIG. 1 is an isometric view of an electrical connection apparatus, according to some embodiments.
FIG. 2 is a block diagram of an electrical connection system, according to some embodiments.
FIG. 3 is an isometric view of an electrical connection system including a transfer switch and a scissor mechanism to transport the transfer switch, according to some embodiments.
FIG. 4 is an isometric view of a first transfer switch decoupled from a second transfer switch according to an actuation of a scissor mechanism, according to some embodiments.
FIG. 5 is a block diagram of a method for power distribution, according to some embodiments.
FIG. 6 is a perspective view of an electrical connection apparatus illustrating a new design.
FIG. 7 is a left view of the electrical connection apparatus of FIG. 6.
FIG. 8 is a right view of the electrical connection apparatus of FIG. 6.
FIG. 9 is a front view of the electrical connection apparatus of FIG. 6.
FIG. 10 is a rear view of the electrical connection apparatus of FIG. 6.
FIG. 11 is a top view of the electrical connection apparatus of FIG. 6.
FIG. 12 is a bottom view of the electrical connection apparatus of FIG. 6.

### DETAILED DESCRIPTION

Following below are more detailed descriptions of various concepts related to, and implementations of electrical connection apparatuses. Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

Various implementations of the present disclosure relate to apparatuses, systems, and methods for electrical connections and and/or methods of servicing electrical connection apparatuses and/or systems. According to various embodiments of the present disclosure, a mechanism can couple with an electrical switch to transport the switch between an extended position and a retracted position. For example, a movable end of the mechanism can affix with a platform for an electrical switch. An opposite end of the mechanism can affix with a wall panel or other base coupling portion to support and retain the mechanism. Upon an actuation of the mechanism, the mechanism can cause the electrical switch to couple with or decouple with a connection, such as a connection with an energy source or sink, or a further switch of an electrical connection system.

Some energy users, such as medical facilities, radar sites, residential structures, or semiconductor fabrication facilities, can couple with multiple energy sources (e.g., one or more of a primary energy source, secondary energy source, or tertiary energy source). For example, an energy sink, e.g., a load, can primarily source energy from a utility grid and secondarily source energy from a backup generator. Another load can primarily source energy from a renewable energy source and secondarily source energy from a utility grid. A transfer switch can actuate to transfer an electrical connection between the various energy sources and the load. The transfer switches can include manual or automatic transfer switches. An automatic transfer switch (ATS) can transfer a connection automatically, upon detection of a condition of a power signal. The condition of a power signal can include a loss of voltage or frequency regulation of a utility grid, or a deficit of power generated by a solar array, relative to power demand. A manual transfer switch (MTS) can include a manually operable switch to selectively couple and decouple energy sources with a load.

In some instances, it may be impractical or undesirable to interrupt power for maintenance activities. A combination of an MTS and an ATS can provide redundancy and aid in the servicing of the transfer switches. For example, an MTS can operate in a pass-through state, where terminals of the MTS are not connected to each other, and are used to pass electrical signals between the ATS and energy sources/loads. The ATS can operate to selectively couple an energy source with the load based on various inputs, including a condition of a power signal. To service or replace the ATS, the MTS can be manually actuated, whereupon the ATS may be removed or otherwise serviced. Upon replacement of the ATS, the MTS can be returned to a pass-through state. However, the removal or other servicing of the ATS can cause a technician to come into proximity with the energized terminals of the ATS and MTS.

To facilitate a servicing procedure (e.g., including while terminals are energized, such as to avoid downtime of the delivery) and reduce or avoid the risk of a technician coming into contact with energized terminals, a mechanism (e.g., of an electrical connection apparatus) can couple with the ATS. For example, the mechanism can include scissor arms which, when extended, couple terminals of the ATS with terminals of the MTS. Retracting the scissor arms can decouple the ATS from the MTS, which may aid serviceability. A screw drive can extend and retract the scissor arms. For example, the screw drive can include an electrically driven or mechanically driven screw. The mechanism can include a scissor drive mounted between a wall of an electrical cabinet and an electrical switch. For example, the mechanisms can be fastened or otherwise permanently or semi-permanently coupled with the electrical cabinet and the switch. Various such features can transport a switch between extended and retracted positions to couple terminals of the switch with further terminals, such as terminals coupled with an energy source or a load.

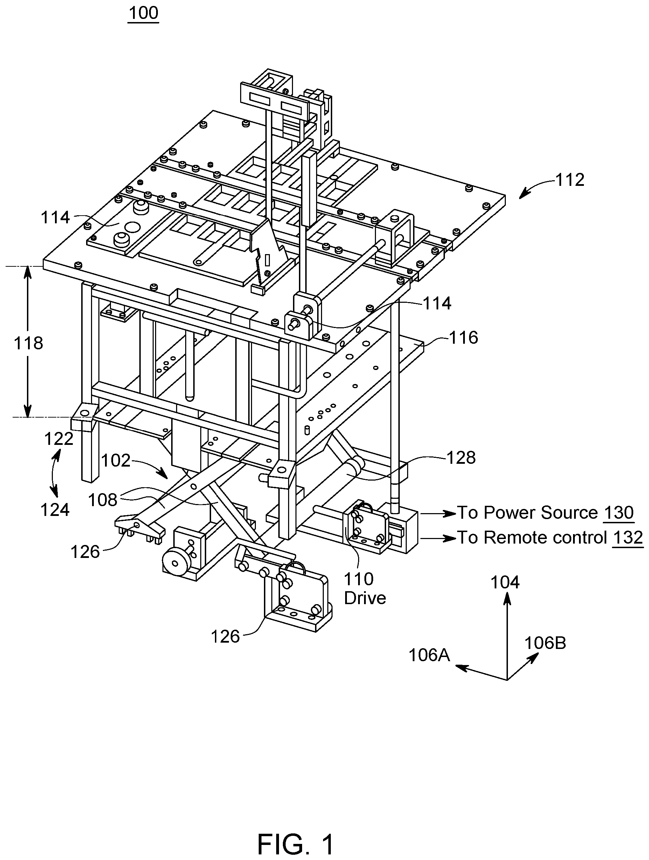

In FIG. 1, an electrical connection apparatus 100 is provided according to a depicted view including a vertical direction 104, a first lateral direction 106A perpendicular to the vertical direction 104, and a second lateral direction 106B perpendicular to the first lateral direction 106A and the vertical direction 104. The first lateral direction 106A and second lateral direction 106B can be referred to generally or collectively as a lateral direction 106 (e.g., for motion or placement along a lateral plane defined by the first lateral direction 106A and the second lateral direction 106B). References to lateral, vertical, upper, lower, etc. refer to the figures and are not limiting as to the operation of the systems and apparatuses described herein. For example, the electrical connection apparatus 100 of FIG. 1 can be oriented in various positions according to various implementations of the present disclosure.

The electrical connection apparatus 100 includes a mechanism 102 to transport a switch between a retracted position (e.g., in a negative vertical direction 104) and an extended position (e.g., in a positive vertical direction 104). The mechanism 102 includes multiple scissor arms 108, e.g., a plurality of scissor arms 108. The mechanism 102 includes a drive 110 configured to receive power from a power source, the power to extend the scissor arms 108 to transport the switch to the extended position and retract the scissor arms to transport the switch to the retracted position.

The electrical connection apparatus 100 can include a platform 112 integral to or coupled with the mechanism 102. The mechanism 102 or the platform 112 can include or couple with attachment points 114 to couple with the switch (e.g., an automatic transfer switch, ATS). For example, the platform 112 can extend in a lateral direction 106 perpendicular to the vertical direction 104. The attachments points 114, the platform 112, or the switch can include non-conductive portions, such that a non-conductive path is formed from the terminals of the switch, through the attachment points 114 and to a power source of the drive 110. For example, the platform 112 can be non-conductive, or couple with a non-conductive portion of the switch. Such a path can electrically isolate the switch from the mechanisms, such that a technician does not encounter a high voltage via contact with the mechanism when the switch is coupled with an energy source.

The drive 110 can include components like a shaft and a motion-transmitting element such as a gear, belt, chain, or cam. The operation of these components can generate rotational or linear motion to cause an actuation of a scissor arm mechanism. In some embodiments, the drive is implemented as a screw drive 110, which, upon actuation, can extend and retract the scissor arms 108. The screw drive 110 can connect to an electrical or mechanical power source. In some embodiments, the screw drive 110 can be configured to receive electrical power from an electrical power source such as a battery. In some embodiments, the screw drive 110 can be configured to receive mechanical power from a mechanical drive receiver (e.g., bit receptacle) configured to receive a driver for rotation of a screw of the screw drive. For example, the mechanical drive receiver can be a redundant power source, or the electrical source may be optionally implemented. The electrical source may be isolated from connection terminals of the switch. For example, the electrical source can include a battery or capacitor, or can include diode or galvanic isolation to isolate another power source from a load. Accordingly, the drive may be powered when the switch is not connected to a power source, or can avoid high voltage potentials proximal to a technician, in some cases.

The scissor arms 108 include the depicted first pair of scissor arms 108 at the front of the mechanism 102, and a second pair of scissor arms 108 at the rear of the mechanism 102. In some embodiments, additional or fewer scissor arms may be present. For example, a third set of scissor arms can be present between the first pair and second pair, or a multi-scissor linkage can include a scissor arm assembly having multiple pairs of scissor arms arranged along the vertical direction 104.

A first end 122 of the scissor arms 108 (or linkages thereof) are coupled with a platform 112. The coupling with the platform 112 can including direct coupling. In some embodiments, the coupling is via one or more other elements, such as an intermediate platform 116. The platform 112 has attachment points 114 to couple with the switch. The platform can be spaced from the intermediate 116 platform, with the intermediate platform 116 disposed between the scissor arms 108 and the platform 112. The spacing 118 between the platform 112 having attachment points 114 and the intermediate platform 116 can maintain a spacing between the drive 110 and the switch, even in a retracted position. For example, the spacing can exceed a dielectric breakdown voltage for a power signal of a switch associated with the electrical connection apparatus 100.

A second end 124 of the scissor arms 108 can couple with a sidewall or other portion of an electrical cabinet (or an intermediate member coupled with the electrical cabinet). For example, the second end 124 can be integral with (e.g., welded) or fastened to the electrical cabinet. In some cases, the second end 124 can include fasteners or accommodations for fasteners to couple with the electrical cabinet. The fasteners can be configured for permanent or semi-permanent installation, such as via rivets, bolts, or welds. At the second end 124, a first of the scissor arms 108 includes a mounting foot 126 to rigidly couple with the electrical cabinet. A second of the scissor arms 108 connects to a linear actuator 128 actuated by the screw drive 110. The linear actuator 128 is captured in a track perpendicular to the vertical direction 104 in which the scissor arms 108 extend and retract. The track, in turn, couples with a further mounting foot 126 to rigidly couple with the electrical cabinet. Upon an actuation of the screw drive 110, the linear actuator 128 advances along the track, corresponding to a scissoring (extension or retraction) of the scissor arms 108.

The drive 110 may include an electrical motor. For example, the electrical motor can cause a rotation of a screw of the drive 110 (e.g., where the drive 110 is a screw drive). The electrical motor can receive a power or control signal from a power source 130 or a control input 132. In some embodiments, a power source 130 and control input 132 is provided as separate signals. For example, a first signal can provide an indication of a direction of operation and a second signal can provide power to actuate the drive. In some embodiments, a power source 130 and control input 132 is provided as a same signal. For example, a pushbutton or other control (e.g., manually actuated electrical switch) can provide power to rotate the switch in a selected direction, or a single control switch can actuate the drive according to toggle sequencing (e.g., extending, then retracting, the extending and so on).

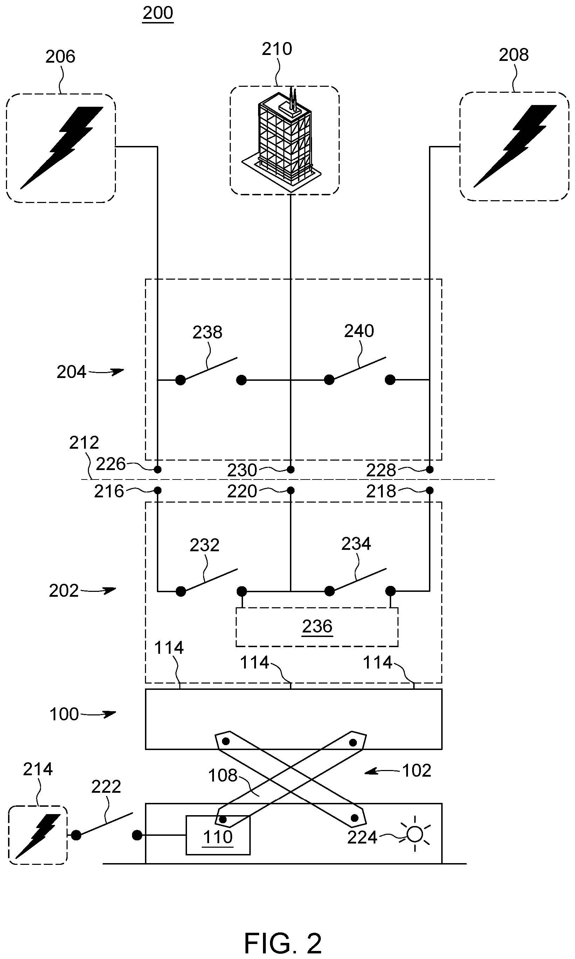

FIG. 2 is a block diagram of an electrical connection system 200, according to some embodiments. For example, the electrical connection system 200 can be configured to electrically connect energy sources to a load according to an extension or retraction of the electrical connection apparatus 100 of FIG. 1, or any other embodiment thereof.

The electrical connection system 200 includes a mechanism 102 including multiple scissor arms 108. The electrical connection system 200 includes a drive 110 to selectively mate one or more switches (e.g., the ATS 202 and MTS 204). The drive includes a screw drive coupled with at least one of the scissor arms 108. The drive is configured to extend the scissor arms to transport a first switch of the one or more switches to an extended position. The drive is configured to retract the scissor arms to transport the first switch to a retracted position.

The electrical connection apparatus 100 can be coupled with a first switch, depicted as an automatic transfer switch (ATS) 202. The retraction of the scissor arms 108 can cause the ATS 202 to decouple from a further electrical switch, depicted as an MTS 204, along an isolation line 212. For example, the isolation line 212 can extend a distance according to an operating voltage of the switches 202, 204 (e.g., to avoid arcing between the switches 202, 204 or a tool or hand in proximity thereto). The line of isolation 212 need not be perpendicular to the axial direction of the mechanism 102. Indeed, the line of isolation 212 may follow a curvilinear path between the switches of the system 200. The decoupling of the switches can aid a technician to service, remove, or replace the ATS 202 as separated from the MTS 204.

In an illustrative example, a first energy interface corresponds to a primary energy source 206 such as a utility grid. The second energy interface corresponds to a secondary energy source 208 such as a generator set, backup battery, or renewable energy source. For example, in a grid-based system, the ATS 202 can preferentially couple the load with a utility grid and cutover to a secondary energy source upon a detection of a condition of a signal received form the utility grid (overvoltage, undervoltage, frequency deviation). In a micro grid system, the ATS 202 can preferentially couple the load with a renewable energy source and cutover to an energy storage system, generator set, or utility power upon loss of signal (e.g., upon nightfall for a rooftop solar system).

The ATS 202 includes a first terminal set 216 to couple with a first energy source 206, a second terminal set 218 to couple with a second energy source 208, and a third terminal set 220 to couple with a load 210. Each of the terminal sets 216, 218, 220 can include one or more terminals. For example, in some embodiments, the terminals sets 216, 218, 220 can each include a power and a return line, three phase terminals (phase a, phase b, and phase c), or other terminal sets. The terminal sets 216, 218, 220 of the ATS 202 can be configured to couple with corresponding terminal sets 226, 228, 230 of the MTS 204. For example, upon actuation of the mechanism 102, the ATS 202 can rise to couple with the corresponding terminals of the MTS 204.

To actuate the mechanism 102, a screw drive 110 can be actuated via a mechanical or electrical power source. In some embodiments, the electrical power source is a battery 214 which is local to the electrical connection apparatus 100 (e.g., located in a same electrical cabinet). A mechanically actuated manual switch 222 (e.g., normally open pushbutton switch 222) can actuate the mechanism 102 to extend or retract the scissor arms 108.

A sensor can detect a position or connectivity of the mechanism 102, ATS 202, MTS, or other aspect of the system 200 to determine a position of the switches 202, 204. An indicator 224 can indicate a position detected by the sensor. For example, the indicator 224 can indicate a visual, audible, or electronic indication of a position. The position can be detected or reported as a digital indication. For example, the indication can be via a light emitting diode which displays a color or on/off status indicating that the mechanism is fully extended, fully retracted, or otherwise positioned.

The ATS 202 includes a third switch 232 to couple a first terminal set 216 with a third terminal set 220 and a fourth switch 234 to couple a second terminal set 218 with the third terminal set 220. The ATS 202 can operate the third switch 232 and fourth switch 234 to selectively couple the load 210 with one or the other of the energy sources 206, 208, isolate the load 210 from either of the energy sources 206, 208, or, in some circumstances, simultaneously couple both of the energy sources 206, 208 with the load 210. The third switch 232 or fourth switch 234 of the ATS 202 can include an electro-mechanical relay, solid state relay, circuit breaker, motor-operated switch, thyristor, or other switching device actuatable by control circuitry 236.

The control circuitry 236 of the ATS 202 includes can control the third switch 232 and fourth switch 234. For example, the control circuitry 236 can cause an actuation responsive to a grid failure or other failover switching, or in response to another detected condition. Some illustrative examples of such conditions include a user input to the mechanically actuated manual switch 222, a time of day, a predicted load demand, an indication of planned maintenance, energy cost, or green energy content of an energy source.

Another transfer switch separates the ATS 202 from the load 210 and energy sources 206, 208. The second switch is depicted as a manual transfer switch (MTS) 204. The MTS 204 includes a mechanism to manually actuate the switches. For example, the MTS 204 can include a direct handle, wrench, socket, integrated circuit breaker toggle, key-actuated switch, or other mechanically actuated fifth switch 238 to connect a first terminal set 226 to a third terminal set 230. A sixth switch 240 can connect a second terminal set 228 to the third terminal set 230.

The ATS 202 and MTS 204 can be configured to operate in combination. For example, during an operational mode (e.g., normal operation) the fifth switch 238 and sixth switch 240 of the MTS 204 can remain open, to pass the connections to the ATS 202. The ATS 202, in turn, can operate a third switch 232 and fourth switch 234 to selectively couple the load 210 with a primary (or first) energy source 206 and a secondary (or second) energy source 208. The ATS 202 can include an actuator to automatically operate the switches 232, 234. For example, upon detection of a condition, the ATS 202 can close one switch (e.g., the third switch 232) and open another switch (e.g., the fourth switch 234). In some embodiments, one switch may be opened prior to closing the other switch, such as when a load 210 is configured to ride through a transient condition (sometimes referred to as a break-then-make technique). In some embodiments, a switch may be opened subsequent to closing another switch (sometimes referred to as a make-then-brake technique).

In some instances, the loads 210 or sources 206, 208 can include high voltages, such as a 460V or 240V system. Further, the ATS 202 can receive preventative or corrective maintenance which can include removing the ATS 202 or manipulating the ATS 202 *in situ.* Accordingly, the actuation of the mechanism 102 can separate the ATS 202 from the MTS 204 to create a standoff distance between an operator and the high voltage of the load 210 or sources 206, 208.

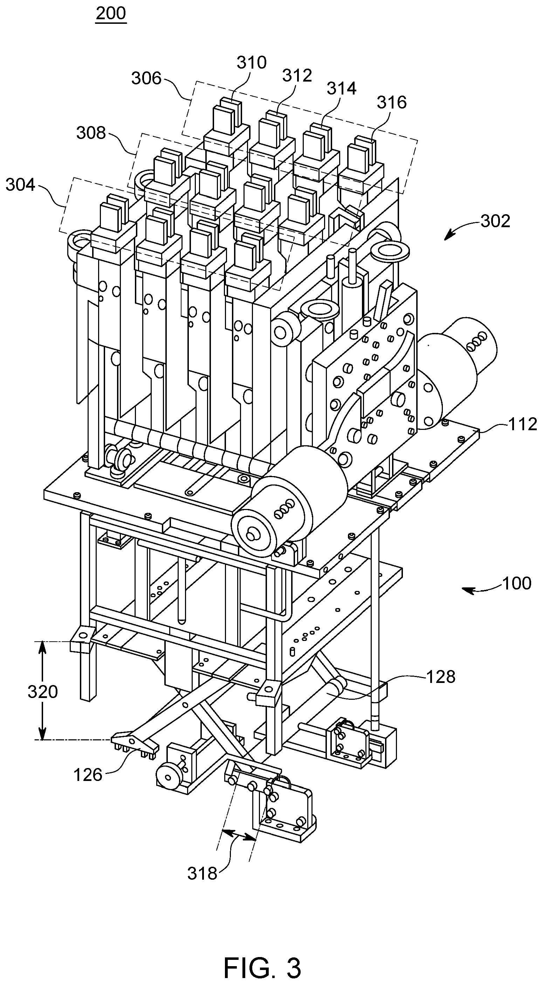

FIG. 3 is an isometric view of an electrical connection system including a transfer switch and a scissor mechanism to transport the transfer switch, according to some embodiments. In FIG. 3, a switch 302 is shown coupled with an electrical connection apparatus 100. For example, the electrical connection apparatus 100 can be or include attributes of the electrical connection apparatus 100 of FIG. 1, in some embodiments. The switch 302 can include a transfer switch 302, such as the ATS 202 or MTS 204 of FIG. 2. The switch 302 can be coupled with the electrical connection apparatus 100 via attachment points 114 along a platform 112.

The transfer switch 302 includes a first set of terminals 304 (which may correspond to the first terminal set 216 of FIG. 2), second set of terminals 306 (which may correspond to the second terminal set 218 of FIG. 2), and third set of terminals 308 (which may correspond to the third terminal set 220 of FIG. 2). Each set of terminals can correspond to an energy interface. For example, the third set of terminals 308 can be configured to couple with a load 210 and other of the sets of terminals 304, 306 (via an actuation of one or more constituent switches of the transfer switch 302). The other of the sets of terminals 304, 306 can be configured to couple with respective energy sources, such that upon an actuation of a constituent switch of the transfer switch 302, the load 210 can be connected to one or more energy sources.

Upon an actuation of the drive 110, an end of the scissor arms 108 coupled with a linear actuator 128 can cause the drive to scissor (with another end of the scissor arm 108 connected to a fixed foot 126). The linear actuator 128 can extend a first distance 318 corresponding to a vertical transport distance 320 of the scissor arms 108. The vertical transport distance 320 can decouple the depicted transfer switch 302 from a further transfer switch (or other connection of an energy interface).

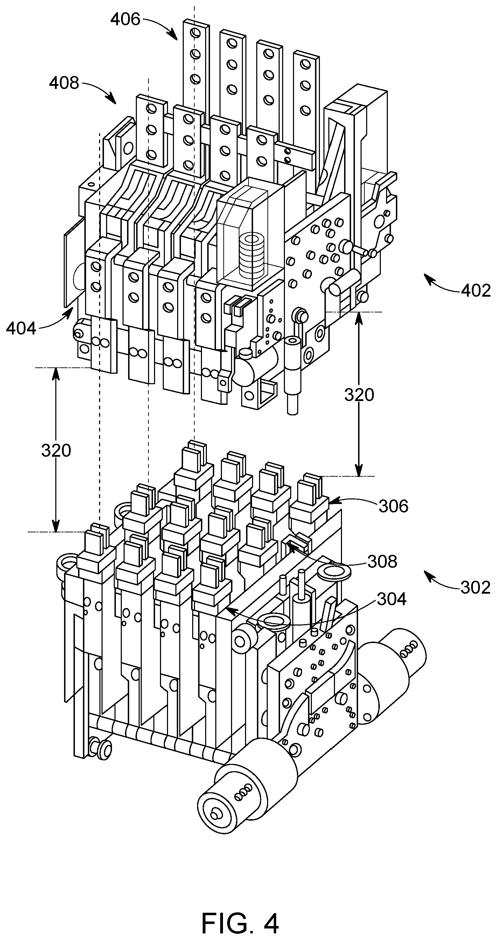

The depicted transfer switch 302 includes four terminals per terminal set. Such terminals can include, for example, a neutral terminal 310, first phase terminal 312, second phase terminal 314, and third phase terminal 316. According to various embodiments, the transfer switch 302 can include any number of a terminals per terminal set. The terminals can be configured to interface directly with a terminal for the load 210 or energy sources, or can couple with a further transfer switch, as depicted in FIG. 2, and hereinafter, at FIG. 4.

In FIG. 4, an isometric view of a first transfer switch 302 decoupled from a second transfer switch 402 is provided according to an actuation of a scissor mechanism, according to some embodiments. The first transfer switch 302 (e.g., the transfer switch 302 of FIG. 3), is shown relative to a second transfer switch 402. The first transfer switch 302 can be coupled with an electrical connection apparatus 100 as in FIG. 3, however, the electrical connection apparatus 100 is omitted for clarity of the figures.

The second transfer switch 402 includes a fourth set of terminals 404 (which may correspond to the first terminal set 226 of FIG. 2), fifth set of terminals 406 (which may correspond to the second terminal set 228 of FIG. 2), and sixth set of terminals 408 (which may correspond to the third terminal set 230 of FIG. 2). Each set of terminals can correspond to an energy interface. For example, the sixth set of terminals 408 can be configured to couple with a load 210 and other of the sets of terminals 404, 406 (via an actuation of one or more constituent switches of the transfer switch 402).

A distance 320 between the terminals of the first transfer switch 302 and second transfer switch 402 can correspond to a transport distance of the mechanism 102, such that the activation of the mechanism can cause a coupling between corresponding terminals of the first transfer switch 302 and the second transfer switch 402.

The second transfer switch 402 can include a mechanically actuated manual switch of a manual transfer switch. The fourth set of terminals 404 can be configured to couple with a first electrical energy source 206 and the first set of terminals 304 in the extended position, to couple the first electrical energy source 206 with the first set of terminals 304. The fifth set of terminals 406 can be configured to couple with the second electrical energy source 208 and the second set of terminals 306 the extended position, to couple the first electrical energy source 206 with the second set of terminals 304. The sixth set of terminals 408 can be configured to couple with the load and the third set of terminals in the extended position, to couple the load with the third set of terminals. A constituent switch of the second switch can electrically couple the sixth set of terminals 408 with one of the fourth set of terminals 404 or the fifth set of terminals 406.

The first transfer switch 302 can include control circuitry 236 to detect a signal as received by the fourth set of terminals. The control circuitry 236 can compare a value of the signal to a signal threshold (for any condition of the signal). The control circuitry 236 can couple, responsive to the comparison and using the third switch 232, the sixth set of terminals with the fourth set of terminals. The control circuitry 236 can decouple, responsive to the comparison and using the third switch 232, the sixth set of terminals from the fifth set of terminals.

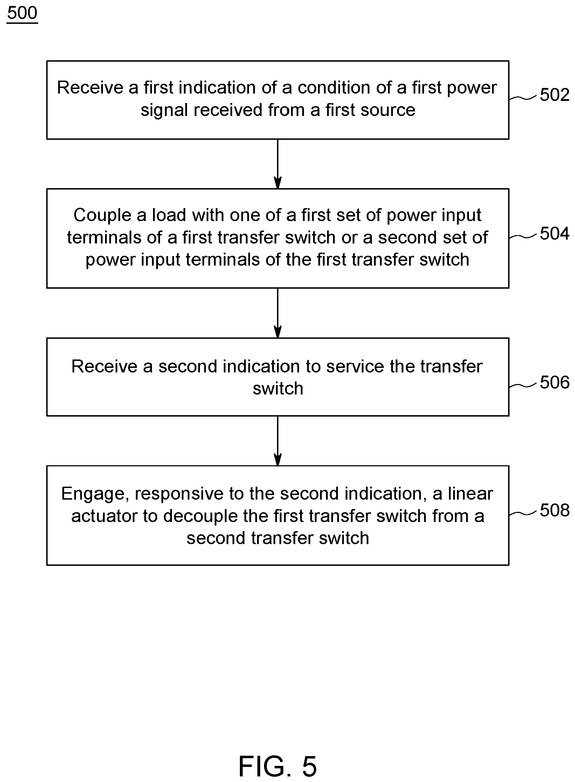

FIG. 5 is a flow diagram for a method 500 of servicing an electrical connection system, according to some embodiments. The method 500 can be performed by a controller including various circuits, instructions, processors, or other logical elements. The controller can include multiple logic units, processors, relays, or other circuits which are distributed throughout a system. In some embodiments, the controller can include a first circuit which is electrically isolated from a second circuit. For example, control circuitry 236 or an associated switching device of an ATS 202 may be isolated or otherwise distributed from a mechanically actuated manual switch 222, but may be referred to collectively as a controller. Likewise, in some embodiments, the controller can include multiple (e.g., redundant) circuits, wherein a reference to the controller can refer to a subset of the circuits or to the multiple circuits collectively. In some embodiments, the controller can include one or more processors coupled with memory. For example, the memory can store instructions such as programable thresholds (e.g., a programable logic controller, PLC).

In brief summary, at operation 502, the method 500 includes receiving a first indication of a condition of a first power signal received from a first source. At operation 504, the method 500 includes coupling, responsive to the condition of the first power signal, a load with one of a first set of power input terminals of a first transfer switch or a second set of power input terminals of the first transfer switch. At operation 506, the method 500 includes receiving a second indication to service the transfer switch. At operation 508, the method 500 includes engaging, responsive to the second indication, a linear actuator to decouple the first transfer switch from a second transfer switch, the second transfer switch configured to couple the load with one of the first power signal or a second power signal according to a position of a mechanically actuated manual switch.

At operation 502, the method 500 includes receiving a first indication of a first power signal received at a first source. In some embodiments, the indication includes a condition of the power signal, such as a measured condition of a voltage, power factor, earth or neutral fault, or phase imbalance. In some embodiments, the indication may be received from a communicatively coupled device, such as the measured condition as measured by a communicatively coupled sensor, or another indication such as a user input or data feed of a grid operator. In some embodiments, the first indication may be determined based on a comparison of a measured value to a stored or programmable threshold value.

At operation 504, the method 500 includes coupling, responsive to the condition of the first power signal, a load with one of a first set of power input terminals of a first transfer switch or a second set of power input terminals of the first transfer switch. For example, the first transfer switch can include an ATS 202 to automatically actuate a constituent switch based on the indication. The ATS 202 can include control circuitry 236 to actuate the constituent switch to connect a load 210 to a primary energy source 206, secondary energy source 208, tertiary energy source, or so on.

In some embodiments, coupling the load with the second set of power input terminals includes coupling a set of load terminals with the first set of power input terminals and thereafter decoupling the set of load terminals from the second set of power input terminals (e.g., a make-then-break technique). In some embodiments, coupling the load with the second set of power input terminals includes decoupling the set of load terminals from the second set of power input terminals and thereafter coupling a set of load terminals with the first set of power input terminals (e.g., a break-then-make technique).

At operation 506, the method 500 includes receiving a second indication to service the transfer switch. In some embodiments, the second indication can be received locally at a location of the transfer switch. For example, the second indication can be received from a manually actuated switch, as an electrical signal indicating a retraction of a pair of scissor arms 108 of a linear actuator. The electrical signal can be generated from a power source electrically isolated from the first set of power input terminals and the second set of power input terminals, in some embodiments (e.g., by a battery). In some embodiments, a mechanical drive receiver can be provided to actuate the pair of scissor arms. Such a mechanical drive receiver can be provided in addition to or instead of an electrically actuated drive. For example, the mechanical drive receiver and electrical drive system can both rotate a same drive of a screw drive for the scissor arms.

At operation 508, the method 500 includes engaging a linear actuator coupled with the scissor arms 108 to decouple the first transfer switch from a second transfer switch. The second transfer switch is configured to couple the load with one of the first power signal or a second power signal according to a position of a mechanically actuated manual switch. For example, the second transfer switch can include an MTS 204 separating the ATS 202 from a load 210 and electrical energy sources.

The depicted operations are not intended to be limiting. Additional, fewer, or different operations can be performed in the method 500. For example, in some embodiments, the method can include an operation of providing an indication of a position of the linear actuator. For example, the indication can include a display on a user interface (e.g., an LED, or other display), an audible alert, or a digital communications signal such as an SMS or email message.

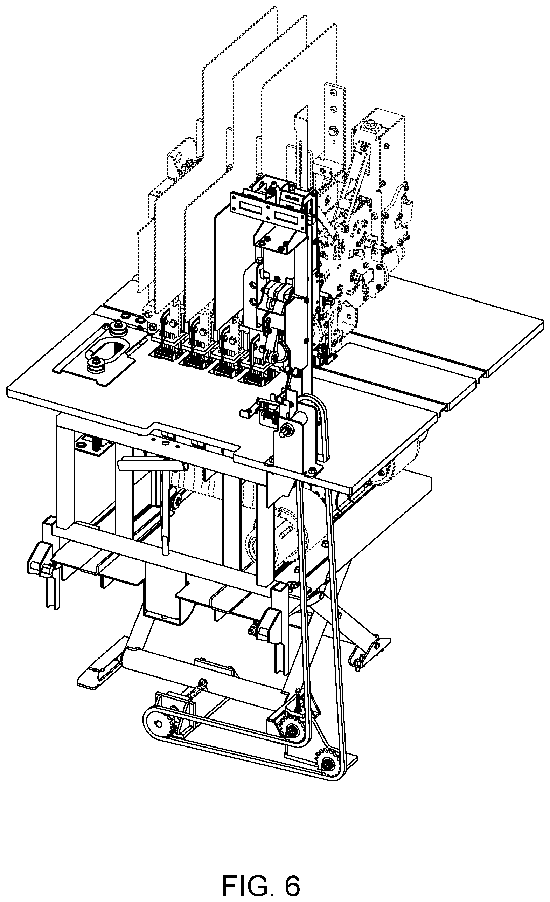

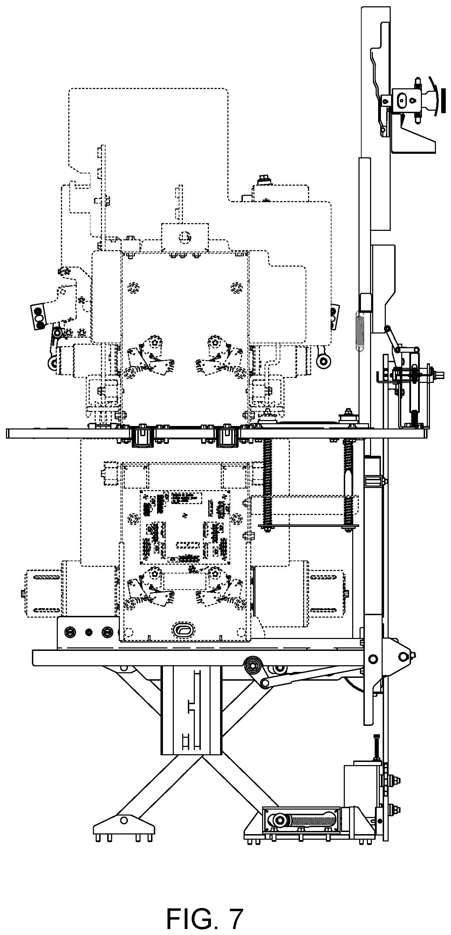

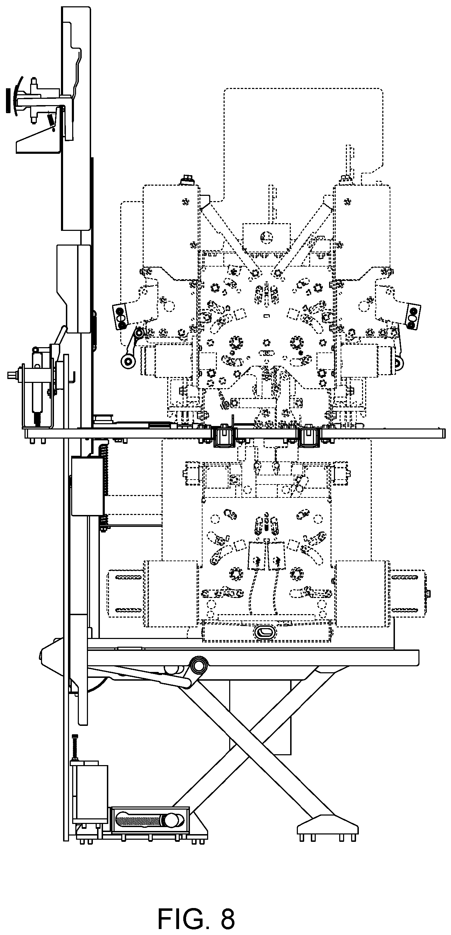

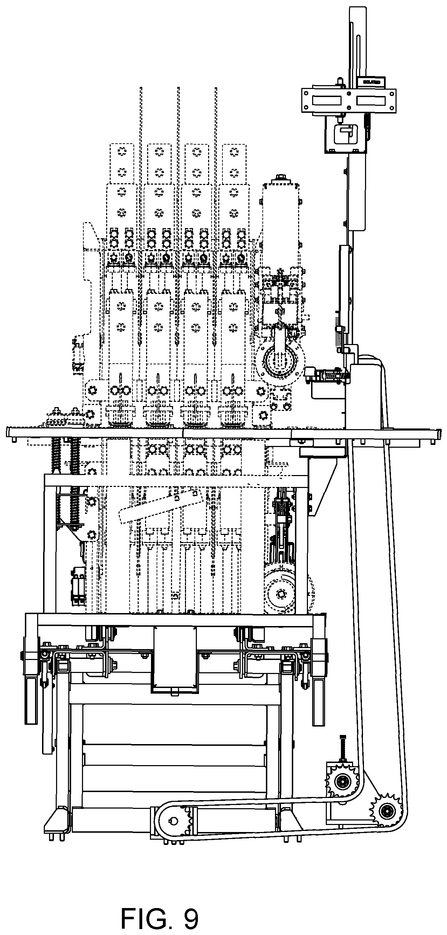

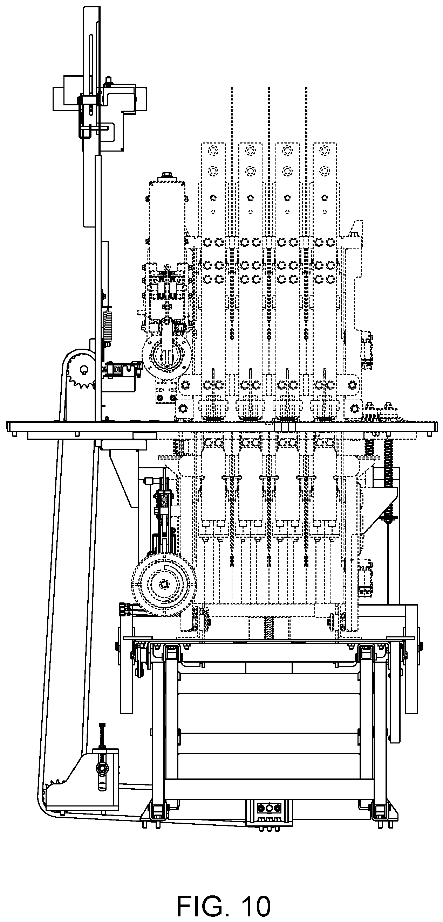

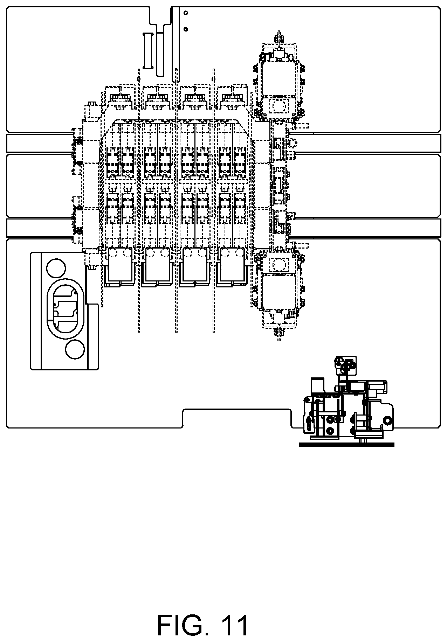

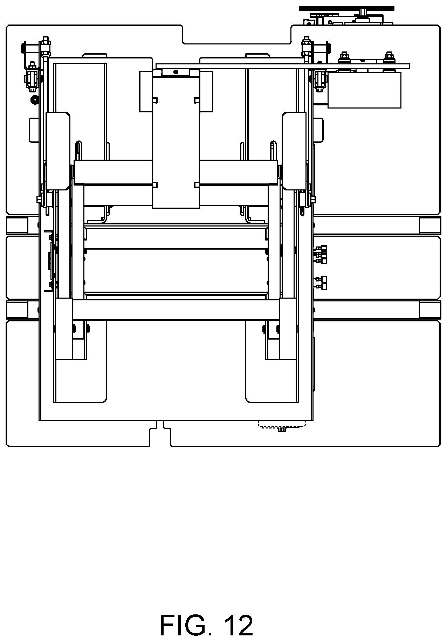

FIG. 6 is a perspective view of an electrical connection apparatus illustrating a new design. A left view of the electrical connection apparatus is depicted in FIG. 7. A right view of the electrical connection apparatus is depicted in FIG. 8. A front view of the electrical connection apparatus is depicted in FIG. 9. A rear view of the electrical connection apparatus is depicted in FIG. 10. A top view of the electrical connection apparatus is depicted in FIG. 11. A bottom view of the electrical connection apparatus is depicted in FIG. 12.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining can be stationary (e.g., permanent or fixed) or moveable (e.g., removable or releasable). Such joining can be achieved with the two members coupled directly to each other, with the two members coupled to each other using one or more separate intervening members, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling can be mechanical, electrical, or fluidic. For example, circuit A communicably "coupled" to circuit B can signify that the circuit A communicates directly with circuit B (i.e., no intermediary) or communicates indirectly with circuit B (e.g., through one or more intermediaries).

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the systems, apparatuses, and methods, as shown in the various exemplary embodiments is illustrative only. Additionally, any element disclosed in one embodiment may be incorporated or utilized with any other embodiment disclosed herein. Although only one example of an element from one embodiment that can be incorporated or utilized in another embodiment has been described above, it should be appreciated that other elements of the various embodiments may be incorporated or utilized with any of the other embodiments disclosed herein.

## Claims

1. An electrical connection apparatus (100) for switch actuation, the electrical connection apparatus comprising:
a mechanism (102) to transport a switch between a retracted position and an extended position, the mechanism comprising:
a plurality of scissor arms (108); and
a drive (110) configured to receive, from a power source (130), power to:
extend the scissor arms to transport the switch to the extended position; and
retract the scissor arms to transport the switch to the retracted position.

2. The electrical connection apparatus of claim 1, wherein:
the drive (110) is an electrical screw drive; and
the mechanism (102) includes a plurality of attachment points to couple with the switch, the coupling including a non-electrically conductive path between the power source and any terminals of the switch.

3. The electrical connection apparatus of claim 1 or 2, further comprising:
the power source (130), wherein the power source is a battery coupled with the mechanism and electrically isolated from the switch.

4. The electrical connection apparatus of any of the preceding claims, comprising:
a mounting foot (126) configured to couple with an electrical cabinet at a first end of the scissor arms; and
an attachment point to couple with the switch at a second end of the scissor arms.

5. The electrical connection apparatus of any of the preceding claims, wherein the mechanism comprises at least one of:
a mechanical drive receiver configured to receive a driver for rotation of a screw of the drive; and
a sensor to indicate a position of the scissor arms, the sensor comprising an interface to provide data indicating the position to a display, the sensor powered by the power source.

6. The electrical connection apparatus of any of the preceding claims, further comprising:
a manually actuated switch to selectively pass an electrical signal from the power source to the drive, the electrical signal to cause the drive to extend or retract the plurality of scissor arms to transport the switch between the extended position and the retracted position.

7. An electrical connection system for switch actuation, the electrical connection system comprising:
a mechanism (102) comprising a plurality of scissor arms (108); and
a drive (110) to selectively mate one or more switches, the drive comprising a screw drive coupled with at least one of the scissor arms, and configured to:
extend the scissor arms to transport a first switch of the one or more switches to an extended position; and
retract the scissor arms to transport the first switch to a retracted position.

8. The electrical connection system of claim 7, wherein the scissor arms are configured to extend and retract along an axial direction perpendicular to a surface of a platform, the platform comprising a plurality of attachment points to couple with the first switch.

9. The electrical connection system of claim 7 or 8, further comprising:
the first switch, wherein the first switch comprises:
a first set of terminals configured to couple with a first electrical energy source;
a second set of terminals configured to couple with a second electrical energy source;
a third set of terminals configured to couple with a load; and
a third switch to electrically couple the third set of terminals with one of the first set of terminals or the second set of terminals, wherein
the first switch is configured to couple with a second switch in the extended position and decouple from the second switch in the retracted position.

10. The electrical connection system of claim 9, further comprising:
the second switch, wherein the second switch comprises:
a fourth set of terminals configured to couple with:
the first electrical energy source; and
the first set of terminals in the extended position, to couple the first electrical energy source with the first set of terminals;
a fifth set of terminals configured to couple with:
the second electrical energy source; and
the second set of terminals the extended position, to couple the first electrical energy source with the second set of terminals;
a sixth set of terminals configured to couple with:
the load; and
the third set of terminals the extended position, to couple the load with the third set of terminals; and
a fifth switch to electrically couple the sixth set of terminals with one of the fourth set of terminals or the fifth set of terminals.

11. The electrical connection system of claim 10, wherein the first switch includes control circuitry configured to:
detect a signal as received by the fourth set of terminals;
compare a value of the signal to a signal threshold;
couple, responsive to the comparison and using the third switch, the sixth set of terminals with the fourth set of terminals;
decouple, responsive to the comparison and using the third switch, the sixth set of terminals from the fifth set of terminals; and
the second switch comprises a mechanically actuated manual switch of a manual transfer switch.

12. The electrical connection system of claim 10 or 11, wherein the screw drive is electrically powered from an electrical source which is electrically isolated from the first electrical energy source and the second electrical energy source, and optionally wherein the electrical source a battery.

13. The electrical connection system of any of claims 7-12, wherein the screw drive is engageable via a mechanically actuated electrical switch remote from the mechanism, and optionally wherein the screw drive comprises a drive receiver to receive a driver for rotation of a screw of the screw drive.

14. A method of servicing an electrical connection system comprising:
receiving, by an electrical controller, a first indication of a condition of a first power signal received from a first source;
coupling, by the electrical controller, responsive to the condition of the first power signal, a load with one of a first set of power input terminals of a first transfer switch or a second set of power input terminals of the first transfer switch;
receiving, by the electrical controller, a second indication to service the transfer switch; and
engaging, by the electrical controller, responsive to the second indication, a linear actuator to decouple the first transfer switch from a second transfer switch, the second transfer switch configured to couple the load with one of the first power signal or a second power signal according to a position of a mechanically actuated manual switch.

15. The method of claim 14, wherein:
coupling the load with the second set of power input terminals comprises coupling a set of load terminals with the first set of power input terminals, and thereafter decoupling the set of load terminals from the second set of power input terminals; and/or
receiving the second indication comprises receiving, from a manually actuated switch, an electrical signal indicating a retraction of a pair of scissor arms of the linear actuator, the electrical signal generated from a power source electrically isolated from the first set of power input terminals and the second set of power input terminals; and/or
the method further comprises displaying, via a user interface, an indication of a position of the linear actuator.
